# EUROPEAN PATENT APPLICATION

(11) **EP 2 160 944 A1**
(43) Date of publication of application: **10.03.2010**
(21) Application number: 08757416.6
(22) Date of filing: 06.06.2008
(51) Int. Cl.: A01K 97/06

(54) **MAT FOR HOLDING FLIES OR BAITS**

(30) Priority: 06.06.2007 CN 200710023323
(71) Applicant: Zhou, Zhiqiang, Wenzhou, Zhejiang 325300 (CN)
(72) Inventor: Zhou, Zhiqiang, Wenzhou, Zhejiang 325300 (CN)
(74) Representative: Price, Nigel John King
(86) International application number: PCT/CN2008/001113
(87) International publication number: WO 2008/148312

(57) **Abstract**

A mat for holding flies or baits includes a holding mat body formed by foamed material and one or more shaped slot(s) separately disposed on the body. The shaped slots pass through the body along the thickness direction and one end of each shaped slot is connected with a cutting slit passing through the body along the thickness direction. The cutting slit is used to hold the hook portion or the vanes of flies or baits. The holding mat can be used to hold various flies and baits quickly and laborsavingly.

## Description

### Field of the Invention

The present invention relates to a holding mat for use in flies of the field of fly fishing and in baits or lures in the field of sport fishing.

### Background of the Related Art

Fly fishing is in vogue in countries across Europe and the United States, and flies serve as fishing lures in fly fishing. Currently, commercially available fixing means for flies usually make use of the mat for holding flies as disclosed in US Patent No. US6079148A. Such a mat for holding flies has a holding mat body made of a foamed material, with a rectangular cut-out portion disposed on the body, and the region that is not cut out is a stepped portion corresponding to the cut-out portion. A cutting slit is provided at the stepped portion, with one end communicative with the cut-out portion via a guide slot, which is usually of the V-shape, and the other end sealed off.

However, such a mat for holding flies has the following defects.

(1) It is monotonous for such a mat for holding flies to hold the flies, which causes inconvenience in use. When such a mat for holding flies is used to hold the flies, it is necessary to firstly place the flies upright in the cut-out portion, then align the flies to the "V"-shaped guide slot, with the hook tips located below and toward the tail end of the "V"-shaped guide slot, and subsequently push the flies into the cutting slit. If the hook tips of the flies are placed toward the direction of the cutting slit and the cutting slit is then drawn in, the hook tips might usually catch the sidewall of the "V"-shaped guide slot, thereby making it impossible to keep on pushing the flies into the cutting slit, so that the holding purpose cannot be achieved and the holding mat might be damaged. It is therefore necessary for the user to confirm the orientation of the hook tips of the flies while using such a mat for holding flies before the flies are pushed into the cutting slit for fixation, and this causes great inconvenience in use to the operator. Moreover, due to insufficient external light sometimes during fly fishing, it may be difficult to confirm the orientation of the hook tips of the flies.

(2) Such a mat for holding flies cannot be universally applied, which increases the fishing costs. Since the cutting slit is extremely small, the mat for holding flies is glued to a base, and since the flies are distanced very close to the cutting slit at the front "V"-shaped guide slot during holding, the resistance is relatively high against which the flies are pushed into the cutting slit. Accordingly, holding is relatively painstaking and slow. If the cutting slit is made relatively large, relatively small-sized flies are usually not easily held and tend to detach from the cutting slit. As a result, flies of different types and specifications require different mats to match therewith, for instance, dry and wet types of flies require dry and wet mats for holding flies, streamer flies require a streamer mat for holding flies, and saltwater flies require a saltwater mat for holding flies. Therefore, it becomes a common practice for anglers to carry therewith various types of boxes containing the required types of mats for holding flies, which increases not only the occupied space but also fishing costs.

Furthermore, it is difficult for tube flies to be inserted for holding in the cutting slit of the aforementioned patent. Tube flies are usually held in lateral holes of foamed holding strips, and these holes have identical aperture diameter and are arranged in equidistance to one another. The defects rest in the facts that insertion is difficult when the tube diameter of the tube fly is larger than the aperture diameter of the lateral hole of the foamed holding strip, and that insertion is easy but holding is difficult when the tube diameter of the tube fly is smaller than the aperture diameter of the lateral hole of the foamed holding strip. The tube flies are sometimes held in strip-shaped slots perpendicularly running through the foamed material, and the strip-shaped slots are arranged in equidistance to one another. The defects of such a product rest in the fact that when the tube diameter of the tube fly is apparently larger than the strip-shaped slot, pressing-in is difficult, hairs of the tube flies are easily damaged and rearrangement is needed upon takeout, and that when the tube diameter of the tube fly is apparently smaller than the strip-shaped slot, the holding function falls short although pressing-in is easy.

In addition, there are further many different types of flies or baits that are either impossible to be held or held only with difficulty by the means of the aforementioned patent or in the prior art. These flies or baits can be divided substantially in three categories: 1) flies or baits with only one hook (with the bodies of the flies or baits integrated with the hook), such as L-shaped or R-shaped spinner bait lures, and buzz bait lures; 2) flies or baits with only one hook (with the bodies of the flies or baits connected with the hook by means of rings), such as single-hook fish-shaped baits, spoon flies and spoon bait lures - flies or baits in this category usually have fish-shaped or flat vanes or spinner baits, and the shape of the flies or baits is relatively complicated; and 3) flies or baits with one or more double or treble hook(s) - this category of flies or baits are differently sized and come in various shapes, the typical types of which include fish-shaped baits, tube flies, spoon baits, spinner baits, etc.

US Patent No. US2004256260 discloses an R-shaped (or L-shaped) box of spinner baits for the first category of flies and baits. When in use, the R-shaped (or L-shaped) spinner baits are held in one hand, a steel wire 51 and an R-shaped ring are placed in the central elongated slots at protruding edges of two plastic recesses, metal spinner vanes are then placed by the other hand into the plastic recesses, and the hook 54 is subsequently pressed in a holding strip 31 of a foamed clamping means. This technical solution is defective as follows: the steel wire 51, the R-shaped ring and the metal spinner vanes cannot be effectively fixed, and the metal spinner vanes as well as the connecting means thereof sometimes have a length of up to 8cm, which may make the steel wire 51, the R-shaped ring and the metal spinner vanes in a swinging state in transit, so that one R-shaped (or L-shaped) spinner bait metal spinner vane and the connecting means thereof collides with another R-shaped (or L-shaped) spinner bait metal spinner vane and the connecting means thereof, thus causing damage to the surface, and even entwining amongst the vanes. In order to avoid such collision, the R-shaped (or L-shaped) spinner baits must be sufficiently spaced but this takes a lot of storage space. This technical solution is also apparently infeasible. In addition, the elastic force (around 80 degrees in general) of a steel wire itself must be overcome in order for the hook 51 to be pressed in the holding strip 31 of the foamed clamping means, and due to the relatively large elastic force, even if the hook is pressed in the holding strip 31 of the foamed clamping means, the hook might eject out of the holding strip 31 of the foamed clamping means under the action of counterforce, especially so after repeated use. If the holding strip of the foamed clamping means is made to be very tight, it will be difficult to press in the hook.

It is also currently common to place R-shaped (or L-shaped) spinner baits and buzz baits inside an injection-molded box. The box has at least one row of plastic partition boards, a row of identically spaced shallow recesses are provided at the upper portion of the partition boards, and the spinner baits and buzz baits are placed in the recesses.The defect thereof lies in the fact that in transit, one spinner bait metal vane (composite spinner baits) and its connecting means might collide with another spinner bait metal vane (composite spinner baits) and its connecting means owing to their swinging and this might damage the surface or lead to entwining or hooking of the vanes. The spacing of the baits should be made sufficiently wide in order to avoid such collision, but this takes a lot of storage space. Particularly when the lure box stands upside down or is overturned, entwining or hooking of the vanes affects the use. Moreover, it is necessary for anglers to choose different products for timely angling according to different fishing sites, water depths, weathers, temperatures and timings, but it is sometimes very difficult to differentiate such features as shapes and colors of the spinner baits (vanes) placed at the bottom of the box.

With regard to the second category, it is impossible for the products in the aforementioned patent or in the prior art to solve the technical problem of holding flies or baits.

With regard to flies or baits in the third category, a small-sized box for spinner baits is disclosed in US Patent US6789669. Foamed holding strips of a hooked clamping means are mounted at both ends and in the middle of the injection-molded box, and metal vanes are placed between partition boards 23 and over partition boards 25 at the bottom. When in use, one hook of the treble hooks is held in hand, the metal vanes are placed between partition boards 23 and over partition boards 25 at the bottom, the treble hooks are rotated to place the hook stems inside a plastic board recess 22, and two hooks of the treble hooks are pressed by hand, so that one hook thereof is pressed in the foamed clamping means, while the two other hooks locate at the upper surface. The defects thereof rest as follows: as the treble hooks must be rotated, pressing-in is relatively laborious; as two hooks locate at the upper surface, the hand might be hurt; as the vanes are not fixed, the surface might be damaged in the swinging state during transportation; since the lure box usually has an upper lid and a lower lid, bodies of small-sized spinner baits and vanes at the upper lid will be pulled out as they are not held when the lids are opened, and this brings inconvenience to use. Moreover, this technology merely attempts to solve the problem of holding certain small-sized spinner baits and fails to address the problem of holding large-sized spinner baits.

In addition, a box for placing baits is disclosed in CN2507258, wherein baits are placed inside a receiving slot 31, and two treble hooks of the baits are respectively held within recesses of a front soft mat and a rear soft mat. Since one of the two treble hooks of the baits is usually positioned at the belly or neck of the baits, the head of the baits will be located above the positioning slot 32 and the soft mat during holding, and even go beyond the box body, thus making the box closing impossible. Moreover, since two hooks are located at the surfaces of the front soft mat and the rear soft mat, the hand might be hurt. Furthermore, it is necessary to take the hooks by hand for holding, and this is neither convenient nor safe. In addition, placement of another treble hooks of the baits is also problematic in that if the treble hooks is not placed near the tail but slightly forward, the baits will not be completely held in the receiving slot. Obviously, such a technical solution falls short of achieving the holding objective.

Simple partition boards are further employed to separate the flies or baits, but this actually does not hold the flies or baits in any reliability, as the flies or baits might be damaged during carryover, and the user might be hurt during takeout and placement.

Still another foamed protection mat (the Happy Hook Protector) in the best fishing equipment for singly protecting hooks winning the European Trade Fair of Fishing Equipment, the EFTTEX 2005 Show in Warsaw, is of flat shape, wherein a notch is in the middle for insertion of hook stems, and the mat is pressed down so that hook tips are inserted into the mat for protective purposes. However, such a product has the following defects: when the hook is relatively small and the hook stem is relatively short, the thickness of the mat will be relatively thin, and the hooks easily protrude outside of the mat to hurt the user; holding is difficult, and both holding and removing the protective mat are inconvenient; moreover, this product still could not solve the problem of holding bodies of the baits.

### Summary of the Invention

The objective of the present invention is to provide a universal holding mat that is simple in structure, fast in holding and convenient in use. Such a holding mat not only applies to holding flies during fly fishing but also applies to holding baits during sport fishing.

To achieve this objective, the present invention provides a mat for holding flies or baits, which comprises a holding mat body made of a foamed material, and one or more shaped slot(s) disposed separately on the body, wherein the shaped slots pass through the body along a thickness direction of the body; one end of the shaped slot is connected with a cutting slit that passes through the body along the thickness direction of the body, and the cutting slit is used to hold the hooks, vanes or similar components of the flies or baits.

The other end of the shaped slot can also be provided with a cutting slit that passes through the body along the thickness direction of the body.

The holding mat can further comprise one or more additional shaped slot(s) disposed separately and corresponding to each of the shaped slots, wherein one end of each additional shaped slot is connected with the shaped slot via a central cutting slit, the other end thereof is further connected with another cutting slit, and the additional shaped slot and the cutting slit both pass through the body along the thickness direction of the body.

Another end of the shaped slot can be provided with a hook slot that accommodates a hook portion.

A resistance-reducing slit that extends along a direction intersecting the longitudinal extension direction of the shaped slot is provided at or near the other end of the shaped slot, and the resistance-reducing slit passes through the body along the thickness direction of the body.

A guide portion can be provided between the shaped slot and the cutting slit connected thereto for guiding the hook portion or vanes or similar components to be inserted into the cutting slit.

The guide portion can be of the V shape, arc shape or rectangular shape.

The holding mat can further comprise a resistance-reducing slit that intersects the cutting slit for reducing resistance when the hook portion or vanes is/are inserted into the cutting slit, and the resistance-reducing slit passes through the body along a thickness direction of the body. The resistance-reducing slit and the cutting slit form a "T" shape, a "Y" shape, a "+" shape or an arrow shape.

A plurality of shaped slots are arranged in parallel to form a set of shaped slots. The body is provided with a plurality of sets of shaped slots arranged in parallel. The shaped slot can be of strip shape, elliptical shape, leaf shape, rhombic shape, circular shape, triangular shape or rectangular shape.

At least one part of the holding mat can be fixed to an accommodating box by a binding means. Only the part of the holding mat that is not provided with the cutting slit or the shaped slot can be fixed to the accommodating box by the binding means. The binding means can be a double faced adhesive tape or an adhesive.

To achieve the aforementioned objective, the present invention further provides a mat for holding flies or baits, which comprises a holding mat body made of a foamed material, and one or more shaped slot(s) disposed separately on the body, wherein one end of each of shaped slots is provided with a hook slot for accommodating a hook portion located at one end of the fly or bait, and the shaped slot and the hook slot pass through the body along a thickness direction of the body. Further provided is a method of holding baits in the aforementioned holding mat, wherein the baits have a hook portion with more than one hook tip at one end thereof, and the method comprises the steps of aligning the hook tips of the hook portion at one end to a hook slot, drawing in to fix; and pressing a body of the baits into a shaped slot.

A resistance-reducing slit that intersects the longitudinal extension direction of each of the shaped slots is provided at the other end of each of the shaped slots, and the resistance-reducing slit passes through the body along the thickness direction of the body.

The shaped slot can comprise a size-enlarging portion for accommodating the hook portion of the flies or baits, or another hook portion. The size-enlarging portion can be of arc shape or rectangular shape, or of any other proper shape.

The hook slots of the shaped slots can communicate with one another to form a common hook accommodating portion.

A separation slot can be provided between each of the shaped slots and the corresponding hook slot respectively, and a sectional area of the separation slot is smaller than that of the corresponding hook slot.

To achieve the aforementioned objective, the present invention further provides a mat for holding flies or baits, which comprises a holding mat body made of a foamed material, one or more cutting slit(s) disposed separately on the body, and an resistance-reducing slit that extends to intersect the cutting slit at or near one end of the cutting slit, wherein the cutting slit and the resistance-reducing slit pass through the body along a thickness direction of the body, and the other end of each cutting slit opens to allow insertion thereto of a hook portion or vanes or similar component parts of the flies or baits.

To achieve the aforementioned objective, the present invention further provides a method of holding flies or baits having vanes in a holding mat, which comprises a holding mat body made of a foamed material and a plurality of cutting slits disposed separately away from one another on the body and passing through the body, and the method comprises the steps of aligning the hook tips of the hook portion at one end to a hook slot, drawing in to fix; and pressing a body of the baits into a shaped slot.

The advantages of the present invention include the following.

(1) The present invention is a success in holding various types of flies and baits. Since the present invention provides the resistance-reducing slit, cutting slits, shaped slots, hook slots, etc., the problem is solved of holding all types of flies and baits with single hook, double hooks, treble hooks and two multiple hooks, thereby eliminating the defect of a monotonous type of fly or bait holding in the prior art. Specifically, by providing the slit, the cutting slits, the shaped slots, etc., the problem of holding various flies and baits with a single hook as well as holding tube flies is solved. By providing the resistance-reducing slit, the cutting slits, the shaped slots, the hook slots, etc., various flies and baits with double hooks, treble hooks and two multiple hooks are reliably held, for instance with regard to spinner baits, the claimed technique solves the problem unsolvable for a long time in the art.

(2) The mat according to this invention has universal application, and saves fishing costs. The holding mat according to the present invention is applicable to flies or baits of various shapes, sizes and types, as flies and baits with different specifications of hooks can be smoothly and conveniently pushed, pulled or pressed from up to down into the cutting slit for holding or drawn from below the body for holding. Accordingly, with the present invention, only one fly- or bait-holding mat is needed for holding flies and baits, thus achieving multifunction with one product. This saves not only space but also cost for anglers. The present invention can bring even more convenience and cost-efficiency to anglers who like both fly fishing and sport fishing. The problems of low universality and high cost inherent in the prior art, where different holding mats are required for different types of flies, are solved

(3) The mat according to this invention is fast, laborsaving and secure in holding. Due to the pre-positioning and accelerating functions of the shaped slot, the hook portion or vanes of the flies or baits can smoothly slide into the cutting slit. Arrangement of the cutting slit at a proper position enables convenient insertion of the vanes into the cutting slit, so that flies or baits of various shapes and constructions, such as L-shaped spinner baits, can be reliably held. Since the cutting slit is sealed at both ends thereof, the hook cannot eject out of the holding mat. The combination of the resistance-reducing slit with the cutting slit reduces the resistance against the insertion into the cutting slit at the same time of ensuring the holding force. The problems inherent in the prior art, where it is impossible to hold the vanes and the hook of the R-shaped (or L-shaped) spinner baits would eject out of the foamed strip, are solved.

(4) Tube flies, bait bodies and vanes can be placed or held by providing the shaped slots. The problems inherent in the prior art are solved where tube flies cannot be reliably held, and bait bodies and vanes cannot be placed or held.

(5) By providing a hook slot for placing a hook portion with a plurality of hook tips, hook tips of treble hooks do not expose above the surface of the holding mat, thus enabling reliable holding of flies or baits with a plurality of hook tips, such as tube flies, spoon baits with double hooks, treble hooks and multiple hooks, spinner baits and common baits, thereby solving the problem in the prior art where the exposure of two hooks in the treble hooks out of the surface of the holding mat easily hurts the hand.

(6) By providing a size-enlarging portion of the shaped slot, double hooks or treble hooks located at the neck or belly of common baits can be placed, thereby solving the difficult problem unsolvable in the art.

(7) By providing the resistance-reducing slit of the cutting slit along the longitudinal direction of the shaped slot, baits with differing shapes and sizes can be smoothly, quickly and reliably held.

(8) According to this invention, plural methods are available to hold flies or baits. Accordingly, it is unnecessary for users to discern the orientation of hook tips of the flies or baits, as the flies and baits can be quickly held by employing different methods. This solves the problem of monotony in holding methods in the prior art.

(9) Features of flies or baits held by holding mat according to this invention are externally and easily discernible, which facilitates the use of the flies or baits and solves the problem of inconvenient use in the prior art where it is not easy to identify the vanes of the L-shaped spinner baits and/or L-shaped spinner flies placed at the bottom of the box.

### Drawings Accompanying the Description

Objectives, solutions and advantages of the present invention can be better comprehended with reference to the exemplary drawings attached herewith.
Fig. 1 is a perspective view showing the mat for holding flies or baits according to one embodiment;
Fig. 2 is a cross-sectional view illustrating the holding mat shown in Fig. 1 taken along the line A-A;
Fig. 3 is a schematic view showing a fly;
Fig. 4 is a schematic view showing a bait;
Fig. 5 is a schematic view showing a method of holding a hook on the holding mat as shown in Fig. 1;
Fig. 6 is an amplified view showing Section I in Fig. 5;
Fig. 7 is a schematic view showing another method of holding a hook on the holding mat as shown in Fig. 1;
Fig. 8 is a top view exemplarily showing one part of the holding mat according to another embodiment;
Fig. 9 is a top view exemplarily showing one part of the holding mat according to still another embodiment;
Fig. 10 is a three-dimensional view exemplarily showing the holding of L-shaped spinner baits with the holding mat as shown in Fig. 9;
Fig. 11 is a schematic view showing one part of the holding mat according to another embodiment;
Fig. 12 is a top view exemplarily showing the holding of a common bait with the holding mat as shown in Fig. 11;
Fig. 13 is a schematic view showing the holding mat according to another embodiment;
Fig. 14 is a schematic view showing the holding mat according to another embodiment; and
Fig. 15 is a schematic view showing the holding mat according to still another embodiment.

### Specific Embodiments for Carrying Out the Invention

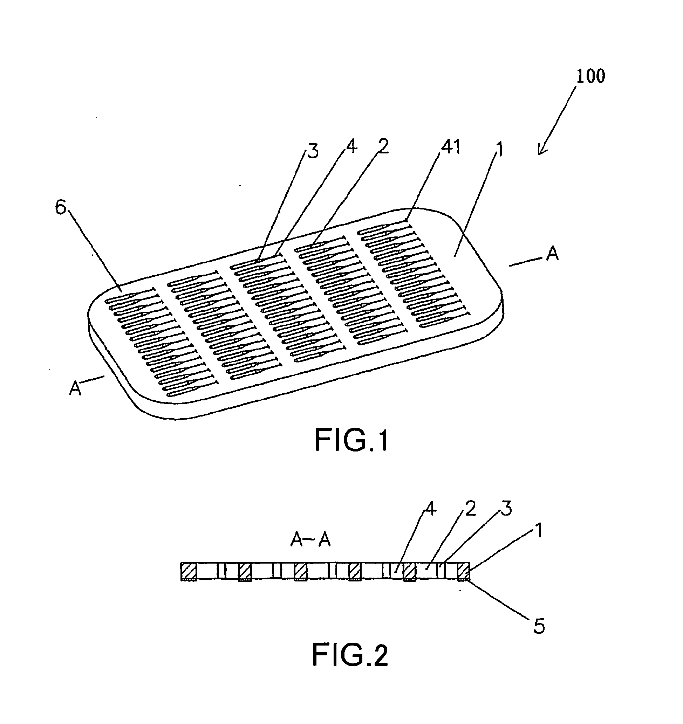

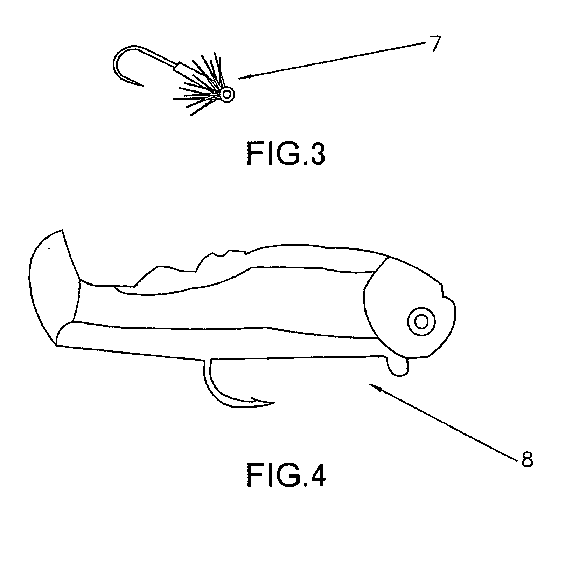

Reference is firstly made to Figs. 1-7 to describe a mat 100 for holding flies or baits according to one of the embodiments of the present invention. The holding mat 100 comprises a flat cuboid holding mat body 1 made of foamed polyethylene. A plurality of independent shaped slots 2 are separately arranged in parallel on the body 1. The shaped slots 2 perpendicularly pass through the upper and lower surfaces of the body 1, so that fly 7 or bait 8 can be positioned very conveniently once an operator places the fly 7 or bait 8 in one of the shaped slot 2 without human eyes gazing at the fly for positioning, thereby facilitating operation. Under an environment with a dim light, the function is more apparent. The shaped slots 2 shown in these figures are of strip shape but they can also be such other shapes as elliptical, willow-leaf shaped, rhombic, circular or triangular.

One end of each shaped slot 2 is connected with a cutting slit 4 that perpendicularly passes through the upper and lower surfaces of the body 1, and the cutting slit 4 functions to hold the hook portion or vanes or other components similar to vanes of the flies or baits. Since the body 1 has certain elasticity, the cutting slit, under the extruding force, tends to naturally open towards both sides when the hook portion or vane is inserted into the cutting slit, thus allowing the holding of flies or baits of various sizes. No matter whether the hook portion of the flies or baits is drawn in the cutting slit 4 with its tip facing the cutting slit 4 or pushed in with the tip back against the slit 4, the hook portion can come in smoothly as the shaped slot 2, having a certain length along the longitudinal extension direction, functions to guide and accelerate the drawing-in or pushing-in process.

A guide portion 3 can be further provided between the shaped slot 2 and the cutting slit 4 connected thereto for guiding the hook portion or vanes to be inserted into the cutting slit 4. The guide portion 3 shown in these figures is of V-shape, but other proper shapes such as arc may as well serve the purpose. The guide portion 3 renders the accelerating distance of the hook portion or vane to be longer, and functions to guide so that the hook portion or vane is smoothly delivered (pressed) from the shaped slot 2 generally having a larger sectional area in the cutting slit 4 generally having a smaller sectional area.

When an inserted fly or a vane or a component part similar to the vane is relatively large in specification, the resistance of the cutting slit 4 may be unduly high for the hook portion or vane, thereby making insertion laborious. Accordingly, it is possible to provide a resistance-reducing slot 41 that intersects the cutting slit 4 at or near one end of the cutting slit 4 away from the shaped slot 2, and the resistance-reducing slit 41 also passes through the body 1 along the thickness direction of the body. Thus, the resistance-reducing slit 41 helps open the cutting slit 4, so that relatively-large flies or baits can be easily inserted into the cutting slit 4 for holding, while elasticity of the body 1 also ensures that relatively-small flies or baits do not detach. The resistance-reducing slit 41 as shown in the drawing is of a linear shape that perpendicularly intersects the cutting slit 4 at an end of the cutting slit 4, and forms a "T" shape together with the cutting slit 4. Of course, the resistance-reducing slit 41 is not limited thereto, and may also be combined with the cutting slit 4 into a "Y" shape, an arrow shape or a "+" shape.

A plurality of shaped slots 2 can be arranged in parallel to form a set of shaped slots 6, and the body 1 can be provided with a plurality of sets of shaped slots 6 arranged in parallel to each other. Each of the shaped slots 2 in the set of shaped slots 6 as shown in the drawing is identical with the others and arranged equidistance to the others. However, the present invention is not limited thereto, as it is also possible to arrange shaped slots 2 of differing shapes and sizes at different intervals to form the set of shaped slots 6, so as to adapt to the shapes of the flies or baits to be held. This also applies to embodiments discussed below and their modifications.

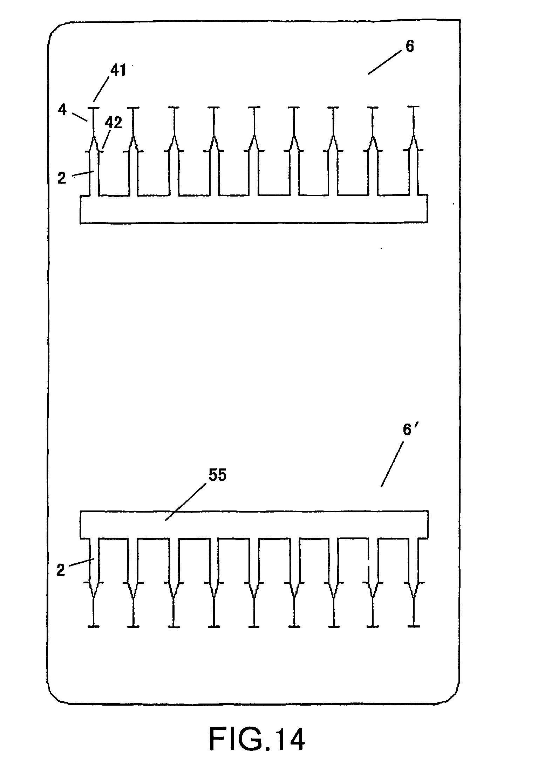

Moreover, shaped slots in adjacent sets of shaped slots 6 may be arranged opposite each other (for instance as shown in Fig. 14 below). Sets of shaped slots arranged in such a manner are particularly appropriate for holding L-shaped spinner baits, because L-shaped (or R-shaped) spinner baits usually have two portions that are distanced relatively far from each other and angled relative to each other, with one portion carrying a vane and the other portion carrying a hook portion. It is thus possible during holding to insert or push the hook portion into the cutting slit of one set of shaped slots 6, and to insert, push or press the vane into the cutting slit of the adjacent set of shaped slots 6, thereby reliably holding the L-shaped spinner baits.

As shown in Fig. 2, the holding mat can be held in a accommodating box or a panel via the binding means 5. The binding means 5 is preferably detachable, and can for instance be a double faced adhesive tape or an adhesive to facilitate replacement. As shown in Fig. 2, it is preferable that the binding means 5 is merely provided at the back and periphery of the body 1 where neither the shaped slot 2 nor the cutting slit 4 is provided, so that insertion of the hook portion or vane is not subject to the resistance inflicted by the binding means 5, and that the hook tip can be located below the body 1, thereby facilitating holding of the flies or baits. This also applies to embodiments discussed below and modifications thereof.

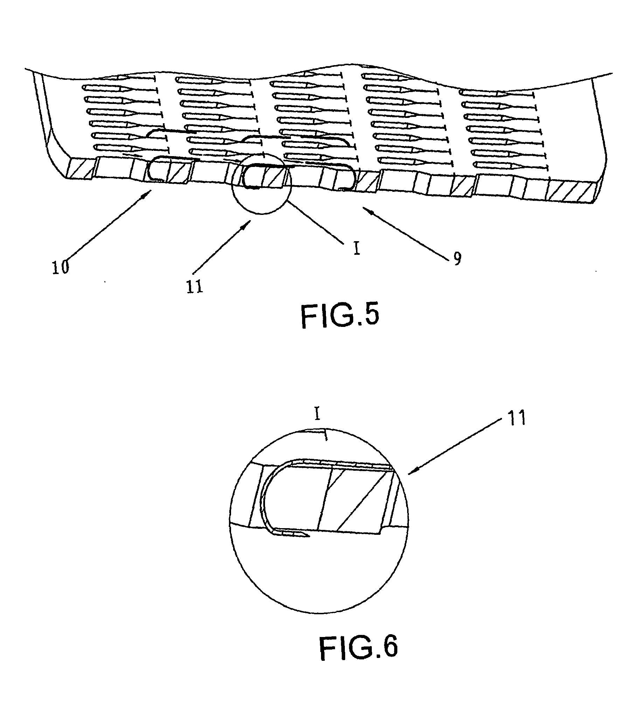

Referring to Figs. 5-6, there are plural methods of using a holding mat with the above construction to hold flies or baits.

Method 1 (as shown by reference numeral 9 in Fig. 5): the user handholds the fly or bait to place it into the shaped slot 2, with the hook tip below and pointing to one end of the shaped slot 2 away from the cutting slit 4, and pushes the fly or bait in the cutting slit as opportunity favors to complete holding. By virtue of the accelerating function of the shaped slot 2 and the resistance-reducing function of the resistance-reducing slit 41, the fly or bait can be inserted more quickly than in the prior art.

Method 2 (as shown by reference numeral 10 in Fig. 5): the user handholds the fly or bait to place it inside the shaped slot 2, with the hook tip below and pointing to the direction of the cutting slit 4, and draws the fly or bait in the cutting slit so as to complete holding by taking advantage of the opportunities.

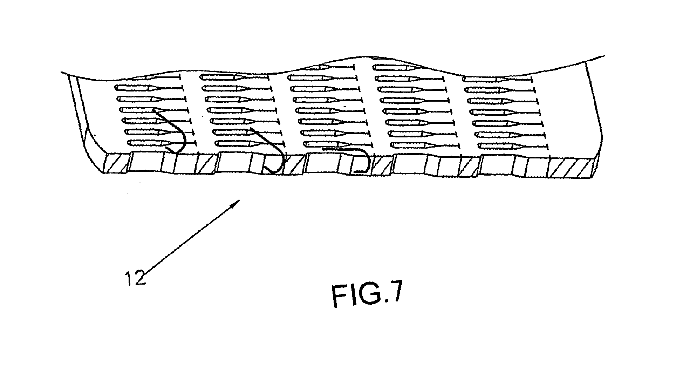

Method 3 (as shown by reference numeral 12 in Fig. 7): the user handholds the fly or bait, with the hook tip below and pointing to one end of the shaped slot 2 away from the cutting slit 4, places the bent portion of the hook portion above the conjunction between the shaped slot 2 and the cutting slit 4, and presses the fly or bait in the cutting slit so as to complete holding by taking advantage of the opportunities.

Method 4 (as shown by reference numeral 11 in Figs. 5-6): the user handholds the fly or bait to place it inside the shaped slot 2, with the hook tip below and pointing to the direction of the cutting slit 4 so that the hook tip is located below the holding mat body, and draws the fly or bait in the cutting slit as opportunity favors to complete holding. Alternatively, holding can also be done without the fly or bait being drawn in the cutting slit.

As a result, different methods can be employed to quickly hold the flies or baits without the orientation of the hook tip of the fly or bait discerned. Accordingly, holding is fast, laborsaving and convenient. When the aforementioned method 2 or 4 is employed to pull the hook portion in the cutting slit 4, the hook tip is substantially positioned before being drawn in due to the arrangement of the independent shaped slots 2, and would not hook the sidewall to damage the hook portion or to interfere with the holding procedure.

In the embodiment mentioned above, through the arrangement of a plurality of independent shaped slots 2 separately as well as cutting slits 4 connected thereto, insertion of the hook portion or vanes or component parts similar to vanes of the flies or baits is rendered more laborsaving and fast, and it is made possible to securely hold flies and baits of various general shapes, thereby providing flexible and reliable holding, enhancing universal applicability, and lowering costs of use. Meanwhile, the user can insert the hook portion into the cutting slit 4 in a multiplicity of modes without taking consideration of the hook portion's orientation and position relative to the holding mat, thus greatly facilitating use thereof, especially in the case of dim light.

To facilitate insertion, it is preferable to shape the shaped slot 2 thus that its size in the longitudinal extension direction of the cutting slit 4 is larger than the size in the direction that intersects the longitudinal extension direction.

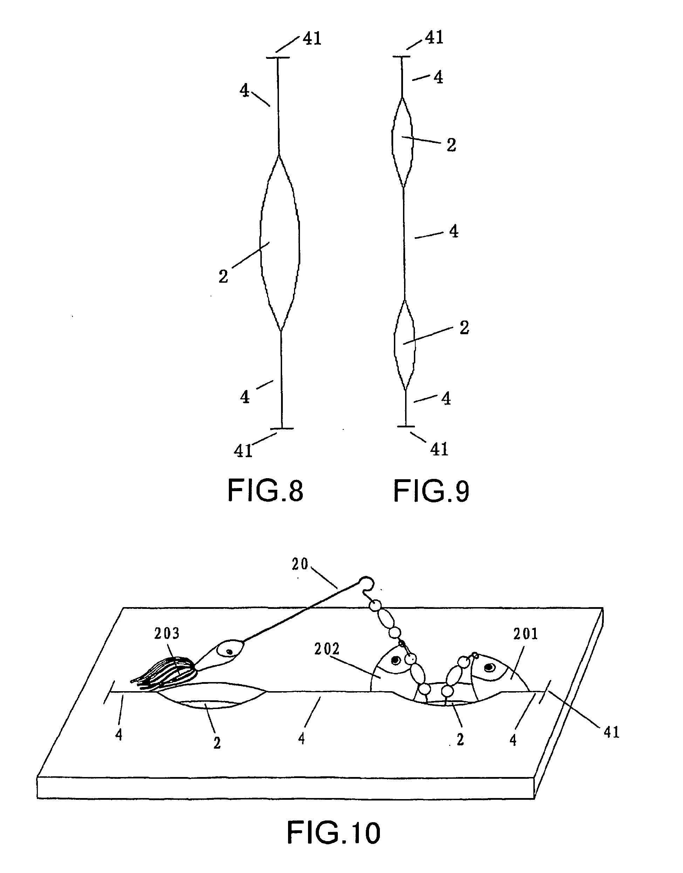

The aforementioned embodiment is applicable to various flies or baits having only one hook and one hook and vane. With reference to Figs. 8-9, various advantageous modifications of the aforementioned embodiment are described below to adapt to flies or baits of various special shapes.

Referring to one modification shown in Fig. 8, the two ends of the shaped slot 2 are respectively provided with two cutting slits 4 and corresponding resistance-reducing slits 41 that pass through the body 1 along the thickness direction thereof. In a holding mat arranged as thus, it is possible to insert the hook portion of flies or baits with single hook into one of the cutting slits 4, and to insert vanes or similar component parts, steel wires, etc., that might be located at different positions of the flies or baits, into another cutting slit 4 as practically demanded. For example, when the holding mat according to the aforementioned modification is used to hold the L-shaped spinner baits or spoon baits, the vanes or similar component parts are aligned to the shaped slot 2 and inserted or pushed in another cutting slit 4 for holding after the single hook at one end thereof is aligned to the shaped slot 2 and pushed in one cutting slit 4. As circumstances demand, it is possible to pull one end of the steel wire of the L-shaped spinner baits placed in the shaped slot also into the cutting slit for holding.

Referring to another modification shown in Fig. 9, two shaped slots 2 are connected by a cutting slit 4 and arranged in series, and distal ends of the two shaped slots 2 are respectively provided with two cutting slits 4 and corresponding resistance-reducing slits 41 that pass through the body 1 along the thickness direction thereof. In a thus arranged holding mat, it is possible to likewise insert the hook portion of flies or baits with a single hook into one of the cutting slits 4, and to insert vanes, steel wire, ring, etc., which might be located at different positions of the flies or baits, into another cutting slit 4 as practically demanded. In the aforementioned two modifications, the guide portion 3 that is provided between the shaped slot 2 and the cutting slit 4 is not shown for the sake of brevity. For instance, referring to Fig. 10, when the holding mat according to the aforementioned modification is used to hold the L-shaped spinner bait 20, the vane 201 or similar component is aligned to another shaped slot 2 and inserted or pushed in another cutting slit 4 for holding after the single hook 203 at one end thereof is aligned to the shaped slot 2 and pushed in one cutting slit 4. As circumstances demand, it is possible to pull one end of the steel wire of the L-shaped spinner bait placed in the shaped slot also into the cutting slit for holding. Fig. 10 shows the circumstance in which no pulling-in occurs. The L-shaped spinner bait 20 as shown in Fig. 10 includes two vanes 201 and 202, and at this time the vane 202 can be aligned to another shaped slot 2 and inserted or pushed in the central cutting slit 4 for holding. Figs. 8 and 9 are identical, where the two end points of the cutting slit are in a sealed state, and so the single hook will not eject out of the holding mat. Of course, it is also conceivable to propose an embodiment with three or more shaped slots 2 so as to adapt to holding flies or baits of particular shapes and configurations.

Similarly, when a buzz bait having a relatively large vane is held, it is also possible to insert the vane directly into the shaped slot 2 for holding after the single hook is well held according to the foregoing method. When the holding mat shown in Figs. 8 and 9 is used to hold L-shaped spinner baits, the holding mat should have such a thickness as sufficient to hold the hook portion, the vane or similar component parts, and the thickness should be at least 5mm or more.

As regards spoon flies or spoon baits, after the single hook thereof is aligned to the shaped slot 2 and pushed in one cutting slit 4, one vane or similar component is then held in the cutting slit 4 between two shaped slots 2. Like the L-shaped spinner flies or baits, some flies or baits such as JIG also have a single hook and a connecting means at the head thereof to connect the vane. The method of holding the same is similar to the method of holding the L-shaped spinner flies or baits. Like the holding mat shown in Fig. 1, with the holding mat shown in Figs. 8 and 9, flies or baits of different types can also be conveniently held. The shaped slot 2 as shown in the figures is of willow leaf shape, but it can also be of such shapes as strip, elliptical, rhombic, circular, triangular and rectangular.

As shown in Figs. 8 and 9, it is possible to provide a guide portion in the shaped slot, and the guide portion can be of V shape, arc shape or rectangular shape. A rectangular guide portion is configured so that the vane or similar component part and the hook portion of flies or baits are smoothly pressed in the cutting slit from over the conjunction between the guide portion and the cutting slit. The vane or similar component part is placed in the shaped slot, pressed or pushed toward the cutting slit at the rectangular end, and can be relatively conveniently held due to the pre-positioning function of the shaped slot. The method of holding the flies or baits is the same as the aforementioned Method 3.

The arrangement shown in Figs. 8 and 9 is simple, convenient and practical, and solves the problems inherent in the prior art where the products swing to cause damage in transit and it is impossible to hold the vanes. The held products, clear at a glance, are easily chosen for fishing according to different fishing sites, water depths, weathers, temperatures and timings, which solves the problem of difficult identification of the featured shapes and colors of the products placed in the box, such as whether spinner baits are of the Colorado Blade type, willow-leaf type, Indiana Blade type or composite type and whether they are white or black. Moreover, the holding mat, produced at a low cost, is convenient in the holding and use of the products, eliminating such defects inherent in the prior art as inconvenient use, high cost and the single hook of the L-shaped spinner baits easily ejecting out of the holding mat.

According to another modification, it is still possible to provide an intersecting resistance-reducing slit that extends along a direction intersecting the longitudinal extension direction of the shaped slot 2 at or near one end of the shaped slot 2 away from the cutting slit 4, and this intersecting resistance-reducing slit passes through the body 1 along the thickness direction of the body 1. Since both ends of the shaped slot 2 are provided with resistance-reducing slits, flies or baits of differing sizes, tube flies in particular, can be held.

Many types of special flies or baits currently available can be held through the modifications discussed above. As these special flies or baits have special shapes (such as L shape and R shape) and carry therewith vanes or similar parts, it is very difficult to completely hold them by means of currently available holding mats, so that there is the problem of frequent collision due to swinging *en route* transportation. Moreover, these products are divided into many types each having vanes of differing colors and shapes to adapt to differing environments and differing types of fish. It is usually impossible for users to visually directly observe and discern the vanes stacked below in the currently available holding mats. Whereas by means of the holding mat according to the aforementioned embodiment and modifications thereof, the vanes or similar component parts are inserted into the cutting slit on the surface of the holding mat, which is made possible not only to hold the vanes or similar component parts, but also to observe the vanes at a glance, thereby facilitating the user to take out the product for timely fishing.

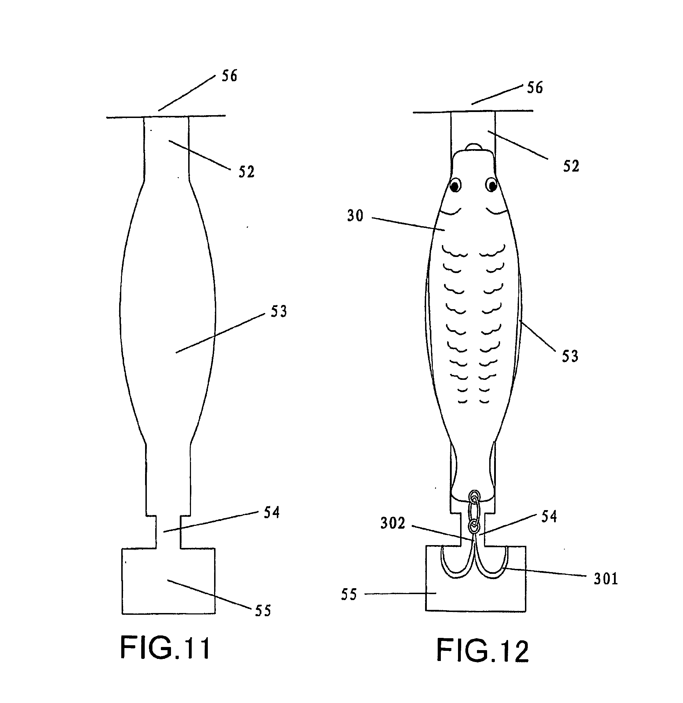

Reference is made below to Figs. 11 and 12 to describe another embodiment according to the present invention. This embodiment is suitable for holding flies or typical baits with a plurality of hook tips. In this embodiment, one or more shaped slot(s) 52 that are separately and substantially closed are provided on the holding mat body 1. The shaped slot 52 shown in Fig. 11 is of rectangular shape, but can also be of any other suitable shapes. The edge of the shaped slot 52 can be linear, saw-toothed, wavy or any other suitable patterns. One end of each of the shaped slots 52 is provided with a hook slot 55 for accommodating a hook portion with a plurality of hook tips at the head or tail of the flies or baits. The hook slot 55 is sized to completely accommodate the hook portion so that the hook portion does not protrude outside of the surface of the holding mat, and is designed on the principle of facilitating holding and takeout. To adapt to the hook portion, the hook slot 55 can be formed into rectangular, elliptical, semispherical, square and other various shapes. The shaped slot 52 and the hook slot 55 pass through the body 1 along the thickness direction of the body 1. Referring to Fig. 12, when this holding mat is used for holding, the hook tip of the hook portion 301 at one end of the typical bait 30 is aligned to the hook slot 55 to be pulled in for holding, and the body of the common bait 30 is then pressed in the shaped slot 52.

As shown in Fig. 11, a separation slot 54 is provided between the shaped slot 52 and the corresponding hook slot 55, and the sectional area of the separation slot 54 is smaller than that of the corresponding hook slot 55. This serves on the one hand to avoid the hook portion placed in the hook slot 55 from detaching from the hook slot 55, and on the other hand for the separation slot 54 to receive the hook stem (such as the hook stem 302 shown in Fig. 12) or to hold tube flies. The separation tube 54 can be of such suitable shapes as rectangular shape, V-shape, saw-toothed shape, and wavy shape, so as to accommodate at least one part of the hook stem or to hold the tube flies. In addition, a resistance-reducing slit 56 that intersects the longitudinal extension direction of the shaped slot 52 can be further provided at the other end of the shaped slot 52, and the resistance-reducing slit 56 passes through the body 1 along the thickness direction of the body 1. Thus, the resistance against which the body of the bait is inserted into the shaped slot 52 is reduced. Although baits have differing shapes and sizes, they have certain lengths and widths, and can hence be pressed in the slot for holding. When a bait having a relatively large width is pressed in the slot, the cutting slit opens to exert pressure on the bait, to thereby hold the bait. When a relatively small bait is held, the elasticity of the holding mat body ensures reliable holding.

The aforementioned holding method is used when the width of the diving lip (a component part that controls the depth of the bait in water and the swimming posture of the bait in water; it is usually disposed below the head of the bait, and shaped mostly as a tongue) of the bait body is smaller than that of the bait body or when there is no such a diving lip. When the width of the diving lip of the common bait is larger than that of the bait body, it is possible to directly fix the diving lip in the shaped slot 52, thereby making the holding more convenient; moreover, the bait body is apparently higher than the holding mat, thereby facilitating takeout.

It is clear that the embodiment shown in Fig. 11 can also be employed to hold spinner flies or baits and spoon flies or baits. At this time, the treble hooks of the spinner flies or baits are placed in the hook slot 55 and the separation slot 54 and pulled in for holding, the body is then placed in the shaped slot 52, and the vanes or similar component parts are subsequently inserted into the shaped slot 52 for holding. With regard to the spoon flies or baits, the vanes or similar component parts are inserted into the shaped slot for holding after the hook portion thereof is held by the same method.

In addition, in the holding mentioned above, the vanes of the flies or baits can also be inserted into the resistance-reducing slit 56 to adapt to flies or baits with certain special structures. In the case of holding tube flies without a hook portion, the hook slot 55 can be dispensed with, and only the shaped slot 52 and the resistance-reducing slit 56 are provided. It is thus possible to insert or press in tube flies of differing tube diameters.

This technical solution solves the dilemma unsolvable for a long time in the art. By providing the hook slot to accommodate the multiple hooks, the entire hook portion is accommodated in the slot, so that there is no such a problem as in the prior art where one or more hook(s) stand higher than the holding mat body to hurt the user. The arrangement of the cutting slit also makes possible reliable holding of differently shaped and sized baits.

Since the common bait has additional one or more double or treble hook(s) at the belly (or neck) or at the other end, it is possible to form a size-enlarging portion 53, that accommodates the hook portion at the belly (or neck) of the bait, in the middle or at the other end of the shaped slot 52 in order to hold such a common bait. The size-enlarging portion as shown in the drawing is of arc shape, but it can also be of other such shapes as rectangular shape to adapt to the bait. Due to the presence of the size-enlarging portion, the hook at the belly or neck can be easily placed below the size-enlarging portion, and taking out of the bait is made easier at the same time. Some squid jigs do not have hook at the belly or neck, or some small quantities of baits have a width at the belly (or neck) or at the other end of the hook portion obviously smaller than the width of the bait body, so the size-enlarging portion is not required to hold them. But the size-enlarging portion is more universally applicable, and also applies to baits whose widths of the squid jig and the hook portion are smaller than that of the bait body. The arrangement of the size-enlarging portion solves the problem that dispersed distribution of hooks at the belly or neck of the baits tends to hurt the hands.

Moreover, the hook slots 55 of the shaped slots 52 can communicate with one another to form a common hook accommodating portion. This lowers the cost for molding the holding mat.

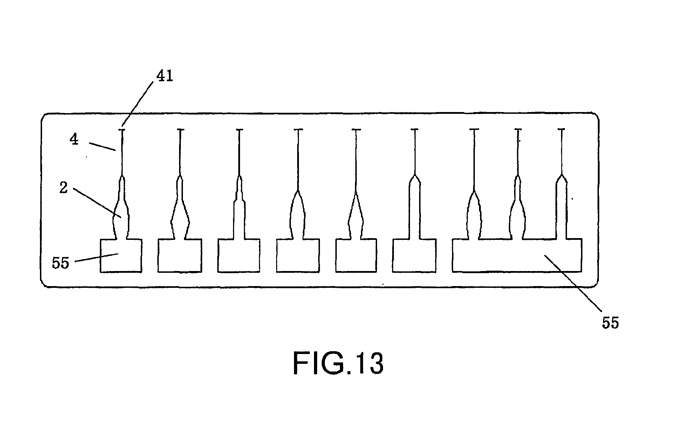

Furthermore, features of the aforementioned embodiments can be combined to adapt to flies or baits of particular shapes. For instance, a hook slot 55 similar to that shown in Fig. 11 can be formed at one end of the shaped slot 2 away from the cutting slit 4 as shown in Fig. 1 to obtain the two embodiments shown in Figs. 13 and 14.

The holding mat shown in Fig. 13 includes a plurality of component parts consisting of slots and slits, and each component part includes the shaped slot 2, the cutting slit 4 and the resistance-reducing slit 41 shown in Fig. 1 and the hook slot 55 shown in Fig. 11. One end of the shaped slot 2 can also be configured as opened and in communication with the hook slot 55. As shown by the component part rightmost in Fig. 13, a plurality of hook slots 55 can be communicated with one other to form a common hook accommodating portion. The shape of the shaped slot 2 is as shown in Fig. 13, which can be such proper shapes as arc shape, arc shape in combination with rhombic shape, arc shape in combination with strip shape, rectangular shape in combination with arc shape, rectangular shape in combination with rectangular shape, elliptical shape, edge shape, strip shape, leaf shape, and rectangular shape. The hook slot 55 can be so variously shaped as to adapt to the hook portion, for instance, rectangular shape, elliptical shape, semispherical shape and square shape. A guide portion can be provided in the shaped slot in Fig. 13, and the guide portion can be of V shape, arc shape, or rectangular shape. A rectangular guide portion is configured so that the vane or similar component part and the hook portion of flies or baits are smoothly pressed in the cutting slit from over the conjunction between the guide portion and the cutting slit. The vane or similar component part is placed in the shaped slot, pressed or pushed toward the cutting slit at the rectangular end, and can be relatively conveniently held due to the pre-positioning function of the shaped slot. The method of holding the flies or baits is the same as the aforementioned Method 3.

This holding mat not only applies to holding various flies and baits held by the aforementioned embodiments, but also particularly applies to tube flies, treble flies, spinner flies or baits with treble hooks, spoon flies or baits with treble hooks, and typical baits with single hook. The general tube flies can be pressed or inserted into the shaped slot 2 for holding. Due to the opening at the end where the shaped slot 2 is connected with the hook slot 55, it is easy for variously sized tube flies to be inserted or pressed in, and the cutting slit 4 and the resistance-reducing slit 41 at the other end of the shaped slot 2 make possible the reliable holding of these differently sized tube flies. As regards the relatively short treble flies, the tail of the flies can be handheld to be directly held in the separation slot (not shown in the figure) between the hook slot 55 and the shaped slot 2, and it is alternatively possible to press the treble flies downwards, and to hold the flies on the upper surface of the holding mat body with the tail hairs pointing upwards. As regards long treble tube flies, their hooks are aligned to the hook slot and pulled in, while their heads are pressed in the section having a smaller sectional area at the upper portion of the shaped slot 2. As regards baits with treble hooks such as the spinner baits, it is possible to hold the treble hooks in the hook slot 55, then simultaneously place the vane and the bait body in the shaped slot 2, and insert or press the vane or similar component part in the cutting slit 4 through the shaped slot 2 for holding. It is also possible to hold the treble hooks in the hook slot 55, then place the bait body in the shaped slot, and insert or press the vane or similar component part in the cutting slit 4 through the shaped slot 2 for holding. As regards spoon flies or baits with treble hooks, it is possible to hold the treble hooks in the hook slot 55, and then insert or press the vane or similar component part in the cutting slit 4 through the shaped slot 2 for holding. Due to the arrangement of the resistance-reducing slit 41, the cutting slit 4 and the shaped slot 2, various vanes or similar component parts with differing thicknesses can be easily inserted or pressed in the cutting slit 4 for holding. As regards common baits with single hook, the hook is pushed in the cutting slit 4, and the body of the common baits is held in the shaped slot 2. The hook slot 55 also functions to guide and reduce resistance because the shaped slot is communicative with the hook slot. Holding of flies and baits is only partially illustrated above by way of examples, but the holding mat is also applicable to various flies and baits including tube flies due to the synergic function of the resistance-reducing slit 41, the cutting slit 4, the shaped slot 2 and the hook slot 55, and is hence universally applicable. Moreover, the holding mat is convenient in both holding and takeout, and low in cost.

The holding mat shown in Fig. 14 includes plural sets of shaped slots 6 and 6'. Each set of shaped slots includes plural shaped slots 2, cutting slits 4 and resistance-reducing slits 41 as shown in Fig. 1 and hook slots 55 as shown in Fig. 11. The hook slot 55 can be formed into rectangular, elliptical, semispherical, square and other various shapes so as to adapt to the hook portion. The shaped slot 2 is opened at one end to communicate with the hook slot 55. As shown in Fig. 14, hook slots 55 communicating with the shaped slots 2 communicate with one another to form a common hook accommodating portion. In Fig. 14, another cutting slit 42 is further provided near the end of the shaped slot 2 close to the cutting slit 4, and the cutting slit 42 intersects the longitudinal extension direction (the perpendicular direction in Fig. 14) of the shaped slot 2. The cutting slit 42 functions identically with the resistance-reducing slit 41 does, both for facilitating insertion or pressing of variously sized tube flies in the shaped slot 2. The holding mat shown in Fig. 14 can hold various flies and baits including tube flies in the same manner as the holding mat shown in Fig. 13. A guide portion can be provided in the shaped slot in Fig. 14, and the guide portion can be of V shape, arc shape, or rectangular shape. A rectangular guide portion is configured so that the vane or similar component part and the hook portion of flies or baits are smoothly pressed in the cutting slit from over the conjunction between the guide portion and the cutting slit. The vane or similar component part is placed in the shaped slot, pressed or pushed toward the cutting slit at the rectangular end, and can be relatively conveniently held due to the pre-positioning function of the shaped slot. The method of holding the flies or baits is the same as the aforementioned Method 3.

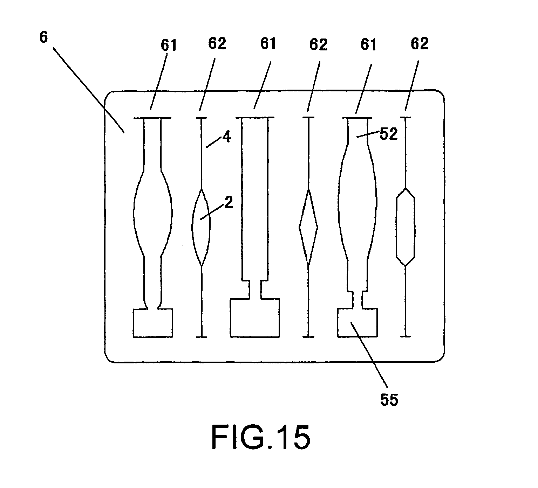

Moreover, as shown in Fig. 15, a component part 62 consisting of the shaped slot 2 and the cutting slit 4 as shown in Figs. 1, 8 and 9 as well as a component part 61 consisting of the shaped slot 52 and the hook slot 55 as shown in Fig. 10 can be included in the same set of shaped slots 6. It is thus possible to hold the aforementioned various flies or baits in the same and single holding mat. In addition, alternately-arranged component parts 61 and 62 are particularly suitable for holding the special thunder striker baits, which also include treble hooks and vanes, similar to a gate shape. However, unlike other L-shaped spinner baits, at one end of the thunder striker bait is provided the treble hooks rather than the single hook. Such baits may not be held with the single components 61 or 62, but can be held with the holding mat shown in Fig. 15. The treble hooks are firstly aligned to the hook slot 55 and pulled in so that the hooks are held at the edge of the hook slot 55 of the component part 61, the bait body is then held in the shaped slot 52 which is connected with the hook slot 55, and the vanes are subsequently inserted into the shaped slot 2 or cutting slit 4 of the adjacent component part 62. Of course, it is also possible for the component part 62 in Fig. 15 to be in the form of component part with two shaped slots as shown in Fig. 9, and hook slots 55 of a plurality of component parts 61 can also communicate with one another as shown in Fig. 14 to form a common hook accommodating portion. Additionally, the component part 62 can also be replaced with a component part consisting of the shaped slot 2, the cutting slit 4, the resistance-reducing slit 41 and the hook slot 55 as shown in Fig. 13.

Some embodiments of the present invention are described above merely by way of examples. Certain substitution solutions easily conceivable to those skilled in the art on the basis of the present invention should all fall into the protection scope of the present invention.

## Claims

1. A mat for holding flies or baits, comprising a holding mat body made of a foamed material, and one or more shaped slot(s) disposed separately on the body, wherein one end of each shaped slot is connected with a cutting slit that extends along a longitudinal extension direction of the shaped slot, and said shaped slot and said cutting slit pass through the body along a thickness direction of the body.

2. The holding mat according to claim 1, wherein the other end of the shaped slot is also provided with a cutting slit that passes through the body along the thickness direction of the body.

3. The holding mat according to claim 1, further comprising one or more additional shaped slot(s) disposed separately and corresponding to each of the shaped slots, wherein one end of the additional shaped slot is connected with the shaped slot via a central cutting slit; the other end thereof is further connected with another cutting slit, and said additional shaped slot and said cutting slit both pass through the body along the thickness direction of the body.

4. The holding mat according to claim 1, wherein the other end of the shaped slot is provided with a hook slot that accommodates a hook portion.

5. The holding mat according to claim 1, wherein a resistance-reducing slit that extends along a direction intersecting the longitudinal extension direction of the shaped slot is provided at or near the other end of the shaped slot, the resistance-reducing slit passing through the body along the thickness direction of the body.

6. The holding mat according to any one of claims 1 to 5, wherein a guide portion is provided between the shaped slot and the cutting slit connected thereto, for guiding the hook portion or vanes or similar parts to be inserted into the cutting slit.

7. The holding mat according to claim 6, wherein the guide portion is of V shape, arc shape or rectangular shape.

8. The holding mat according to any one of the preceding claims, further comprising a resistance-reducing slit that intersects the cutting slit, for reducing resistance which occurs when the hook portion or vanes is/are inserted into the cutting slit, the resistance-reducing slit passing through the body along the thickness direction of the body.

9. The holding mat according to claim 8, wherein the resistance-reducing slit and the cutting slit form a "T" shape, a "Y" shape, a "+" shape or an arrow shape.

10. The holding mat according to any one of the preceding claims, wherein a plurality of shaped slots are arranged in parallel to form a set of shaped slots.

11. The holding mat according to claim 10, wherein the body is provided with a plurality of sets of shaped slots arranged in parallel.

12. The holding mat according to any one of the preceding claims, wherein the shaped slot is of strip shape, elliptical shape, willow leaf shape, rhombic shape, triangular shape, circular shape, arc shape or rectangular shape.

13. The holding mat according to any one of the preceding claims, wherein at least one part of the holding mat is fixed to an accommodating box via the binding means.

14. The holding mat according to claim 13, wherein only the part of the holding mat that is not provided with the cutting slit or the shaped slot is fixed to the accommodating box via the binding means.

15. The holding mat according to claim 13 or 14, wherein the binding means is a double faced adhesive tape or an adhesive.

16. A mat for holding flies or baits, comprising a holding mat body made of a foamed material, and one or more shaped slot(s) disposed separately on the body, wherein one end of each of the shaped slots is provided with a hook slot for accommodating a hook portion of the fly or bait, and the shaped slot and the hook slot pass through the body along the thickness direction of the body.

17. The holding mat according to claim 16, wherein a resistance-reducing slit that intersects a longitudinal extension direction of each of the shaped slots is further provided at the other end of the shaped slot, the resistance-reducing slit passing through the body along the thickness direction of the body.

18. The holding mat according to claim 16 or 17, wherein the shaped slot comprises a size-enlarging portion.

19. The holding mat according to claim 18, wherein the size-enlarging portion is of arc shape or rectangular shape.

20. The holding mat according to any one of claims 16 to 19, wherein the hook slots of the shaped slots communicate with one another to form a common hook accommodating portion.

21. The holding mat according to any one of claims 16 to 19, wherein a separation slot is provided between each of the shaped slots and the corresponding hook slot, a sectional area of the separation slot being smaller than that of the corresponding hook slot.

22. The holding mat according to any one of claims 16 to 21, wherein a plurality of shaped slots are arranged in parallel to form a set of shaped slots.

23. The holding mat according to claim 22, wherein the body is provided with a plurality of sets of shaped slots arranged in parallel.

24. The holding mat according to any one of claims 16 to 23, wherein at least one part of the holding mat is fixed to a accommodating box via the binding means.

25. The holding mat according to claim 24, wherein only the part of the holding mat that is not provided with the resistance-reducing slit or the shaped slot is fixed to the accommodating box via the binding means.

26. The holding mat according to claim 24 or 25, wherein the binding means is a double faced adhesive tape or an adhesive.

27. A mat for holding flies or baits, comprising a holding mat body made of a foamed material, one or more cutting slit(s) disposed separately on the body, and a resistance-reducing slit that extends to intersect the cutting slit at or near one end of the cutting slit, wherein the cutting slit and the resistance-reducing slit pass through the body along the thickness direction of the body, and the other end of each cutting slit opens to allow insertion thereto of a hook portion or vanes of the flies or baits.

28. The holding mat according to claim 27, wherein the resistance-reducing slit and the cutting slit form a "T" shape, a "Y" shape, a "+" shape or an arrow shape.

29. The holding mat according to claim 27 or 28, wherein a shaped slot communicative with each cutting slit is provided at the opening at the other end of the cutting slit.

30. The holding mat according to claim 29, wherein the shaped slot is of strip shape, elliptical shape, willow leaf shape, rhombic shape, triangular shape, circular shape, arc shape or rectangular shape.

31. The holding mat according to claim 29 or 30, wherein another cutting slit that passes through the body along the thickness direction of the body as well as another corresponding resistance-reducing slit is also provided at the other end of the shaped slot away from the cutting slit.

32. The holding mat according to claim 29 or 30, further comprising, in addition to the component part consisting of the resistance-reducing slit, the cutting slit and the shaped slot, another identical component part arranged in series with said component part along the same longitudinal extension direction via another cutting slit passing through the body along the thickness direction of the body.

33. The holding mat according to claim 29 or 30, wherein a hook slot for accommodating the hook portion is provided at the other end of the shaped slot.

34. The holding mat according to claim 29 or 30, wherein a resistance-reducing slit that extends along a direction intersecting the longitudinal extension direction of the shaped slot is provided at or near the other end of the shaped slot, the resistance-reducing slit passing through the body along the thickness direction of the body.

35. The holding mat according to claim 29 or 30, wherein a guide portion is provided between the shaped slot and the cutting slit connected thereto, for guiding the hook portion or vanes to be inserted into the cutting slit.

36. The holding mat according to claim 33, wherein the guide portion is of V shape, arc shape or rectangular shape.

37. The holding mat according to any one of claims 27 to 36, wherein a plurality of cutting slits are arranged in parallel to form a set of cutting slits.

38. The holding mat according to claim 37, wherein the body is provided with a plurality of sets of cutting slits arranged in parallel.

39. The holding mat according to any one of claims 27 to 38, wherein at least one part of the holding mat is fixed to an accommodating box via the binding means.

40. The holding mat according to claim 39, wherein only the part of the holding mat that is not provided with the cutting slit or the shaped slot is fixed to the accommodating box via the binding means.

41. The holding mat according to claim 39 or 40, wherein the binding means is a double faced adhesive tape or an adhesive.

42. The holding mat according to claim 31 or 32, wherein the holding mat has a thickness of more than 5mm.

43. A mat for holding flies or baits, comprising a holding mat body made of a foamed material, and one or more shaped slot(s) disposed separately on the body, wherein a resistance-reducing slit that intersects a longitudinal extension direction of each of the shaped slots is further provided at one end of the shaped slot, the shaped slot and the resistance-reducing slit passing through the body along the thickness direction of the body.

44. The holding mat according to claim 43, wherein a hook slot for accommodating a hook portion of the flies or baits is provided at the other end of each of the shaped slots, the hook slot passing through the body along the thickness direction of the body.

45. A mat for holding flies or baits, comprising a holding mat body made of a foamed material, one or more shaped slot(s) disposed separately on the body, and corresponding cutting slits respectively connected with the shaped slots to extend, wherein a resistance-reducing slit that intersects a longitudinal extension direction of the shaped slot is further provided at or near one end of each of the cutting slits away from the shaped slot, the shaped slot, the cutting slit and the resistance-reducing slit passing through the body along the thickness direction of the body.

46. A mat for holding flies or baits, comprising a holding mat body made of a foamed material, one or more shaped slot(s) disposed separately on the body, corresponding cutting slits respectively connected with one ends of the shaped slots to extend, and corresponding hook slots respectively provided at the other ends of the shaped slots, the hook slots accommodating hook portions, wherein a resistance-reducing slit that intersects a longitudinal extension direction of the shaped slot is further provided at or near one end of each of the cutting slits away from the shaped slot, the shaped slot, the cutting slit, the hook slot and the resistance-reducing slit passing through the body along the thickness direction of the body.

47. A mat for holding flies or baits, comprising a holding mat body made of a foamed material, a plurality of shaped slots disposed separately on the body, corresponding extending cutting slits respectively connected with one end of each of the shaped slots, and corresponding hook slots respectively provided at the other ends of the shaped slots, a resistance-reducing slit that intersects a longitudinal extension direction of the shaped slot further provided at or near one end of each of the cutting slits away from the shaped slot, the shaped slot, the cutting slit, the hook slot and the resistance-reducing slit passing through the body along a thickness direction of the body, wherein the holding mat comprises a plurality of sets of shaped slots formed by a plurality of shaped slots arranged in parallel, and the shaped slots in two adjacent sets of shaped slots in a longitudinal extension direction of the shaped slot are oppositely oriented.

48. A mat for holding flies or baits, comprising a holding mat body made of a foamed material, and a plurality of first component parts and second component parts arranged alternately on the body, wherein the first component parts each comprise a first shaped slot and a corresponding cutting slit connected with one end of the first shaped slot to extend, and the second component parts each comprise a second shaped slot and a corresponding hook slot provided at one end of the second shaped slot, the first and second shaped slots, the cutting slit and the hook slot passing through the body along the thickness direction of the body.

49. The holding mat according to claim 48, wherein the first component parts each further comprise a first resistance-reducing slit that is arranged at or near one end of the cutting slit away from the first shaped slot and intersects a longitudinal extension direction of the first shaped slot and a second resistance-reducing slit that is arranged at or near one end of the cutting slit away from the second shaped slot and intersects a longitudinal extension direction of the second shaped slot, the first and second resistance-reducing slits passing through the body along the thickness direction of the body

50. A mat for holding flies or baits, comprising a holding mat body made of a foamed material, and one or more cutting slit component part(s) provided on the body, wherein each cutting slit component part comprises two separately and linearly arranged cutting slits and corresponding shaped slots provided at one ends of the cutting slits, the shaped slots and the cutting slits passing through the body along the thickness direction of the body.

51. The holding mat according to claim 50, wherein the cutting slit component parts each further comprise a resistance-reducing slit that intersects an extension direction of the cutting slit provided at or near one end of the cutting slit away from the shaped slot, the resistance-reducing slit passing through the body along the thickness direction of the body.

52. The holding mat according to claim 50 or 51, wherein the holding mat has a thickness of more than 5mm.

53. A method of holding flies or baits having vanes in a holding mat, the holding mat comprising a holding mat body made of a foamed material and a plurality of cutting slits disposed separately on the body and passing through the body, the method comprising the steps of:
placing a hook portion of the flies or baits into one cutting slit; and
pressing the vanes in the same cutting slit or into another cutting slit disposed on the body.

54. A method of holding baits in a holding mat as claimed in any one of claims 16 to 26, wherein the baits have a hook portion with more than one hook tip at one end thereof, the method comprising the steps of:
aligning the hook tips of the hook portion at one end to a hook slot, drawing in for fixing; and
pressing a body of the baits into a shaped slot.
